# EUROPÄISCHE PATENTSCHRIFT

(11) **EP 0 845 089 B1**
(45) Veröffentlichungstag und Bekanntmachung des Hinweises auf die Patenterteilung: **01.12.1999**
(21) Anmeldenummer: 96934393.8
(22) Anmeldetag: 29.08.1996
(51) Int. Cl.: F16H 59/04, F16H 61/36

(54) **SCHALTVORRICHTUNG FÜR EIN GETRIEBE**
GEAR CHANGING DEVICE
DISPOSITIF DE COMMANDE DE CHANGEMENT DE VITESSES

(30) Priorität: 06.09.1995 DE 29514311 U
(43) Veröffentlichungstag der Anmeldung: 03.06.1998
(73) Patentinhaber: Sachsenring Automobiltechnik AG, 08058 Zwickau (DE)
(72) Erfinder: BLECHSCHMIDT, Helge, D-08141 Reinsdorf (DE)
(74) Vertreter: Hufnagel, Walter, Dipl.-Ing., Dipl.-Wirtsch.-Ing.
(86) Internationale Anmeldenummer: DE9601603
(87) Internationale Veröffentlichungsnummer: WO9709548

(56) Entgegenhaltungen:
- DE-A- 3 714 090
- US-A- 4 189 952
- US-A- 4 475 414
- US-A- 4 756 205
- US-A- 4 991 460
- PATENT ABSTRACTS OF JAPAN vol. 010, no. 007 (P-419), 11.Januar 1986 & JP 60 163117 A (NIPPON CABLE SYSTEM KK), 26.August 1985, & JP 60 163 117 A (NIPPON CABLE SYSTEM KK)

## Beschreibung

Die vorliegende Erfindung bezieht sich auf eine Schaltvorrichtung für ein Getriebe gemäß dem Oberbegriff des Anspruchs 1.

Eine derartige Schaltvorrichtung ist aus der DE-A1-37 14 090 bekannt. Dort sind zwei jeweils einseitig gelagerte Bolzen vorgesehen, von denen der eine im Gehäuse fest und der andere mittels einer Gelenkkugel sphärisch schwenkbar gelagert ist. Auf dem schwenkbaren Bolzen ist der mit dem Schaltzug verbundene Schalthebel drehbar gelagert. Am fest gelagerten Bolzen ist endseitig ein Winkelhebel drehbar befestigt. Der eine Winkelschenkel ist am Bolzenende des sphärisch gelagerten Bolzens schwenkbar angebracht. Der andere Winkelschenkel ist mit dem Wählzug verbunden. Die einseitige Lagerung der Bolzen bedingt eine hohe Belastung der Lager. Außerdem sind durch die Anlenkung des Winkelhebels für den Wählzug am beweglichen Bolzen für den Schaltzug die Schaltbewegungen miteinander gekuppelt. So bewirkt z.B. ein Lagerschaden des beweglichen Bolzens eine Verstellung der beiden Züge und damit eine Fehleinstellung sowohl der Schaltebene als auch der Gänge.

Mit der vorliegenden Erfindung soll die Aufgabe gelöst werden, eine Entkopplung von Wählzug und Schaltzug zu erreichen.

Gelöst wird diese Aufgabe durch die im Kennzeichen des Anspruchs 1 bzw. des Anspruchs 3 angegebenen Merkmale.

Mit der Erfindung wird eine Beeinflussung des einen Zuges, beispielsweise des Wählzuges, durch den anderen Zug, beispielsweise des Schaltzuges, vermieden.

Weitere vorteilhafte Einzelheiten der Erfindung sind in den Unteransprüchen angegeben und werden nachfolgend anhand eines in der Zeichnung veranschaulichten Ausführungsbeispiels näher beschrieben. Es zeigen:
- Fig. 1: eine Seitenansicht der Schaltvorrichtung gemäß dem Schnitt I-I der Fig. 3,
- Fig. 2: eine Draufsicht auf die Schaltvorrichtung gemäß dem Schnitt II-II der Fig. 1,
- Fig. 3: eine Ansicht gemäß dem Schnitt III-III der Fig 2 und
- Fig. 4: ein mögliches Schaltschema eines zu betätigenden Getriebes.

In einem beispielsweise topfförmigen Schaltgehäuse 1 ist eine Welle 2 in Lagern 3 drehbar gelagert. Parallel und im Abstand von der Welle 2 ist vorzugsweise in gleicher Höhe wie die Welle 2 ein Längsführungsglied in Form einer Führungsachse 4 angeordnet, wodurch von diesen eine virtuelle Ebene 5 aufgespannt wird.

Auf der Welle 2 und der Führungsachse 4 ist mittels Schiebehülsen 6 bzw. 7 ein Einstellschlitten 8 in Richtung der Längsachse 9 der Welle 2 und damit in der Ebene 5 verschiebbar gelagert.

Die auf der Welle 2 vorgesehene Schiebehülse 6 besitzt einen mit einer Steigung P zur Längsachse 9 verlaufenden Schlitz 10. In den Schlitz 10 ragt ein auf der Welle 2 befestigter Mitnahmestift 11 hinein, der im Schlitz 10 verschiebbar geführt ist. An der Welle 2 ist weiterhin ein Wählstellhebel 12 in Form eines Bügels starr befestigt. Dieser Wählstellhebel 12 ist mit dem Ende 13 einer Seele 14 eines Wählzuges 15 gekuppelt.

Der Mantel 16 des Wählzuges 15 ist mittels einer Membran 17 am Schaltgehäuse 1 befestigt. Das Ende des Wählzuges 15 ist in der Membran 17 um beispielsweise bis zu 10° schwenkbar gelagert.

Auf der Welle 2 ist weiterhin ein Schaltbügel 18 über an seinen Schenkeln 19 in deren Endbereich angeordnete Lager 20 schwenkbar gelagert. An der Basis 21 des Schaltbügels 18 ist ein Lagerbolzen 22 befestigt, auf dem eine Lagerbuchse 23 schwenkbar angeordnet ist. An der Lagerbuchse 23 ist das untere Ende 24 des Schalthebels 25 über einen Arm 26 befestigt. An dem einen Schenkel 19 ist eine Halteeinrichtung 27 angebracht, an der das Ende 28 einer Seele 29 eines Schaltzuges 30 befestigt ist. Der Mantel 31 des Schaltzuges 30 ist über eine weitere Membran 32 am Schaltgehäuse 1 befestigt. Das Ende des Schaltzuges 30 ist in der Membran 32 beispielsweise um einen Winkel von etwa 5° bis 10° schwenkbar gelagert.

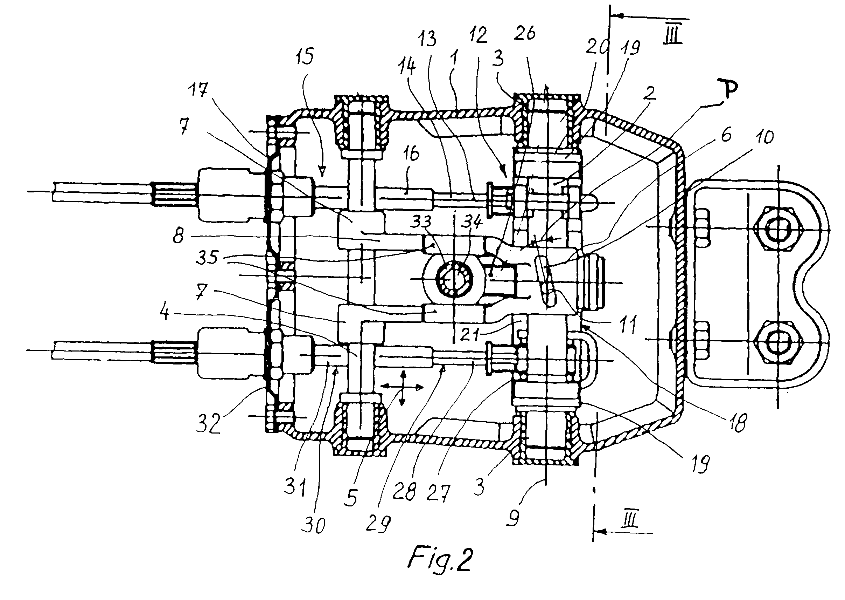

Der Schalthebel 25 ist in einer Gelenkkugel 33, und zwar in deren Bohrung 34, schwenkbar und längsverschiebbar geführt. Die Gelenkkugel 33 ist mittels Gleitführungen 35 (Fig. 2) senkrecht zur Schieberichtung des Einstellschlittens 8 verschiebbar.

Die Wirkungsweise dieser Schaltvorrichtung ist folgende:

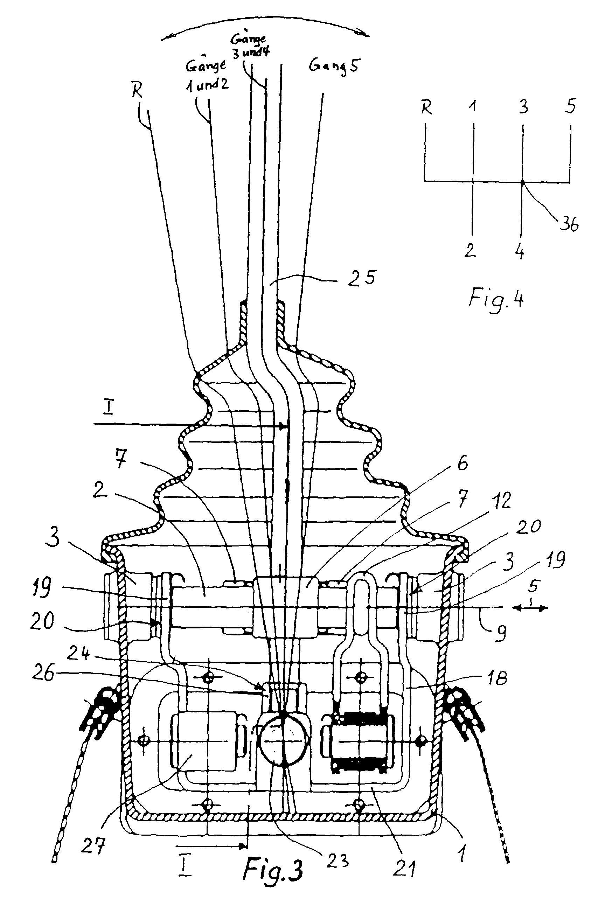

Es sei angenommen, daß sich der Schalthebel 25 in der in den Zeichnungen dargestellten Lage befindet. Diese Stellung entspricht der Wählstellung 36 in der Fig. 4, also der Schaltebene Gang 3 - Gang 4.

Zum Einlegen des ersten Ganges werden nun folgende Funktionen ausgeführt:

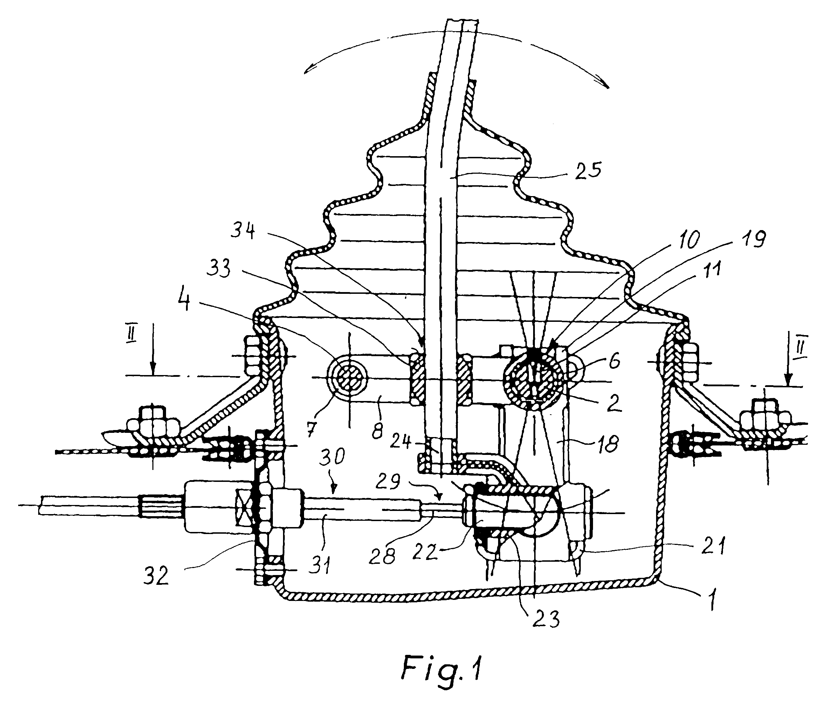

Durch Schwenken des Schalthebels 25 von der in Fig. 3 dargestellten Lage aus nach links in die Schaltebene der Gänge 1 und 2 wird der Einstellschlitten 8 in der Fig. 3 nach links und in der Fig. 2 nach unten verschoben. Dabei wird über den Schlitz 10 der Mitnahmestift 11 in Fig. 2 nach links bewegt und so die Welle 2 in Fig. 1 entgegen dem Uhrzeigersinn geschwenkt.

Dabei wird über den Wählstellhebel 12 der Wählzug 15 verstellt und am Getriebe die Schaltebene der Gänge 1 und 2 eingestellt.

Gleichzeitig gleitet der Schalthebel 25 in der Bohrung 34 der Gelenkkugel 33 entsprechend dem durch seine Lagerung vorgegebenen Kreisbogen an der Lagerstelle in der Gelenkkugel 33.

Durch Bewegung des Schalthebels 25 nach vorn, also in der Fig. 1 nach links, wird der Schaltbügel 18 um die Welle 2 entgegen dem Uhrzeigersinn geschwenkt. Dabei wird die Seele 29 des Schaltzuges 30 in der Fig. 1 nach rechts gezogen, wodurch am Getriebe der Gang 1 eingelegt wird.

Die Schaltvorgänge zum Einlegen der übrigen Gänge erfolgen in analoger Weise.

Es sei nochmals hervorgehoben, daß beim Erfindungsgegenstand die Wahl der Schaltebenen unabhängig von der Wahl der Gänge ist, so daß beide Maßnahmen je für sich funktionsfähig sind, ohne daß sie sich gegenseitig stören. Dies bedeutet zugleich, daß die beiden Maßnahmen unabhängig voneinander auch bei anderen Schaltvorrichtungen Anwendung finden können. Der optimale Vorteil wird jedoch dann erzielt, wenn beide Maßnahmen gleichzeitig in einer Schaltvorrichtung miteinander kombiniert angewendet werden.

## Patentansprüche

1. Schaltvorrichtung für ein Getriebe mit einem um zwei zueinander senkrechten Achsen schwenkbaren Schalthebel (25), wobei beim Schwenken um die eine Achse über erste Stellglieder ein Wählzug (15) zur Wahl der Schaltebenen (R; 1/2; 3/4; 5) und beim Schwenken um die andere Achse ein Schaltzug (30) zum Einlegen der der gewählten Schaltebene (R; 1/2; 3/4; 5) zugeordneten Gänge verstellbar ist, gekennzeichnet durch folgende Merkmale:
- Im Schaltgehäuse (1) der Schaltvorrichtung ist eine Welle (2) drehbar oder mindestens um einen dem Wählwinkel des Schalthebels (25) entsprechenden Winkel schwenkbar angeordnet;
- es ist ein mit dem Schalthebel (25) gekuppelter und durch diesen verschiebbarer Einstellschlitten (8) vorgesehen, der mittels wenigstens einer Schiebehülse (6) auf der Welle (2) in Richtung der Längsachse (9) der Welle (2) verschiebbar gelagert ist und daß in der bzw. in den Schiebehülse(n) (6) die Welle (2) drehbar geführt ist;
- der Einstellschlitten (8) ist zusätzlich mittels Längsführungsmitteln (Führungsachse (4)) in Richtung der Längsachse (9) verschiebbar gelagert, so daß er lediglich in einer Ebene (5) verschiebbar ist;
- die oder wenigstens eine der Schiebehülse(n) (6) des Einstellschlittens (8) ist mit einem Schlitz (10) versehen, der eine Steigung (P) zur Längsachse 9 aufweist;
- auf der Welle (2) ist ein Mitnehmerstift (11) vorgesehen, der in den Schlitz (10) hineinragt und in diesem verschiebbar geführt ist;
- mit der Welle (2) ist ein Wählstellhebel (12) starr verbunden;
- am Wählstellhebel (12) ist der Wählzug (15), insbesondere ein Seilzug, befestigt, der mit die Schaltebenen (R; 1/2; 3/4; 5) einstellenden Getriebemitteln verbunden ist.

2. Schaltvorrichtung nach Anspruch 1, dadurch gekennzeichnet, daß das Längsführungsmittel aus einer parallel und im Abstand zu der Welle (2) verlaufenden Führungsachse (4) besteht, auf der der Einstellschlitten (8) mittels wenigstens einer am Einstellschlitten (8) vorgesehenen Schiebehülse (7) verschiebbar gelagert ist.

3. Schaltvorrichtung nach Anspruch 1 oder 2, dadurch gekennzeichnet, daß der Schalthebel (25) mit dem Einstellschlitten (8) über eine im Einstellschlitten (8) senkrecht zur Längsachse (9) der Welle (2) verschiebbar gelagerte Gelenkugel (33) gekuppelt ist, indem er durch eine Bohrung (34) derselben gesteckt und in dieser verschiebbar geführt ist.

4. Schaltvorrichtung nach einem der Ansprüche 1 bis 3, dadurch gekennzeichnet, daß der Mantel (16 bzw. 31) des als Seilzug ausgebildeten Wählzuges (15) und des Schaltzuges (30) über je eine Membran (17 bzw. 32) am Schaltgehäuse (1) befestigt ist.

## Claims

1. Gearshift device for a gearbox with a shift lever (25) pivotable about two axes perpendicular to one another, such that when pivoted about one axis a selector cable (15) is adjustable by means of first actuators for selection of the shift planes (R; 1/2; 3/4; 5) and when pivoted about the other axis a shift cable (30) is adjustable for engagement of the gears associated with the selected shift plane (R; 1/2; 3/4; 5), characterised by the following features:
- a shaft (2) is disposed rotatable or at least pivotable through an angle corresponding to the selection angle of the shift lever (25) in the shift housing (1) of the shift device;
- a control slide (8) coupled to the shift lever (25) and displaceable by the latter is provided, which slide is mounted displaceable in the direction of the longitudinal axis (9) of the shaft (2) by means of at least one sliding sleeve (6) on the shaft (2), and the shaft (2) is guided pivotable in the sliding sleeve or sleeves (6);
- the control slide (8) is additionally mounted displaceable in the direction of the longitudinal axis (9) by means of longitudinal guiding means (guide shaft (4)) so that it is only displaceable in one plane (5);
- the sliding sleeve or at least one of the sliding sleeves (6) of the control slide (8) is provided with a slot (10) which exhibits a gradient (P) to the longitudinal axis (9);
- an entrainment pin (11) is provided on the shaft (2), which pin projects into the slot (10) and is guided displaceable in the latter;
- a selector control lever (12) is connected rigidly to the shaft (2);
- the selector cable (15), in particular a Bowden cable, is secured to the selector control lever (12), which cable is connected to gearbox means controlling the shift planes (R; 1/2; 3/4; 5).

2. Gearshift device according to claim 1, characterised in that the longitudinal guiding means consists of a guiding shaft (4) which runs parallel and at a distance from the shaft (2) and on which the control slide (8) is mounted displaceable by means of at least one sliding sleeve (7) provided on the control slide (8).

3. Gearshift device according to claim 1 or 2, characterised in that the shift lever (25) is coupled with the control slide (8) by means of a ball joint (33) mounted displaceable in the control slide (8) perpendicular to the longitudinal axis (9) of the shaft (2), in that it is inserted through a bore (34) in the latter and guided displaceable in the latter.

4. Gearshift device according to one of claims 1 to 3, characterised in that the sheaths (16 and 31) of the selector cable (15) in the form of a Bowden cable and of the shift cable (30) are each secured to the shift housing (1) by means of a diaphragm (17 and 32 respectively).

## Revendications

1. Dispositif de commande pour boîte de vitesses, avec un levier de vitesses (25) pouvant pivoter autour de deux axes perpendiculaires l'un à l'autre, dans lequel, lors du pivotement autour d'un premier axe, par l'intermédiaire d'un premier organe de réglage, un élément de traction de sélection (15) destiné à sélectionner les plans de changement de vitesse (R ; 1/2 ; 3/4 ; 5), peut être réglé et, lors du pivotement autour de l'autre axe, un élément de traction de commutation (30) destiné à l'enclenchement des vitesses associées au plan de changement de vitesse (R ; 1/2 ; 3/4 ; 5) sélectionné, peut être réglé,
caractérisé en ce qu'
• un arbre (2) est disposé dans le boîtier de commande (1) du dispositif de changement de vitesse, d'une façon permettant une rotation ou au moins un pivotement, de la valeur d'un angle correspondant à l'angle de sélection du levier de commande (25) ;
• un chariot de réglage (8), couplé au levier de commande (25) et déplaçable au moyen de celui-ci, monté de façon à être déplaçable sur l'arbre (2) dans la direction de l'axe longitudinal (9) de l'arbre (2), à l'aide d'au moins une douille de coulissement (6), l'arbre (2) étant guidé de façon à pouvoir tourner dans la ou les douilles de coulissement (6) ;
• le chariot de réglage (8) est monté de façon à être déplaçable en plus dans la direction de l'axe longitudinal (9), à l'aide d'un moyen de guidage longitudinal (axe de guidage (4)), de manière à n'être déplaçable que dans un plan (5) ;
• la douille de coulissement (6) ou au moins l'une des douilles de coulissement (6) du chariot de réglage (8) est dotée d'une fente (10) présentant une inclinaison (P) par rapport à l'axe longitudinal (9) ;
• une tige d'entraînement (11) qui pénètre dans la fente (10) et est guidée de façon déplaçable dans celle-ci, est prévue sur l'arbre (2) ;
• un levier de réglage de sélection (12) est relié rigidement à l'arbre (2) ;
• l'élément de traction de sélection (15), en particulier un élément de transmission par câble relié à des moyens de transmission réglant les plans de changement de vitesse (R ; 1/2 ; 3/4 ; 5), est fixé sur le levier de réglage de sélection (12).

2. Dispositif de commande selon la revendication 1,
caractérisé en ce que
les moyens de guidage longitudinaux sont constitués d'un axe de guidage (4) s'étendant parallèlement et à distance de l'arbre (2), axe sur lequel le chariot de réglage (8) est monté déplaçable à l'aide d'au moins une douille à coulissement (7) prévue sur le chariot de réglage (8).

3. Dispositif de commande selon la revendication 1 ou 2,
caractérisé en ce que
le levier de commande (25) est couplé au chariot de réglage (8) par l'intermédiaire d'une sphère d'articulation (33) montée dans le chariot de réglage (8), de façon déplaçable perpendiculairement par rapport à l'axe longitudinal (9) de l'arbre (2), par le fait que le levier de commande est enfiché dans un perçage de la sphère d'articulation et est guidé de façon déplaçable dans celui-ci.

4. Dispositif de commande selon l'une des revendications 1 à 3,
caractérisé en ce que
les enveloppes (16 ou 31) de l'élément de traction de sélection (15) réalisé sous la forme d'un élément de transmission à câble, et de l'élément de commande (30), sont respectivement fixées sur le boîtier de changement de vitesse (1) par l'intermédiaire d'une membrane (17, ou 32).
